Europäisches Patentamt

European Patent Office

Office européen des brevets

(11) Publication number: **0 177 083**
**A2**

(12) **EUROPEAN PATENT APPLICATION**

(21) Application number: **85201469.5**

(22) Date of filing: **16.09.85**

(51) Int. Cl.⁴: **A 01 K 5/02**

(30) Priority: **03.10.84 IT 2343184 U**
**05.07.85 IT 2240885 U**

(43) Date of publication of application:
**09.04.86 Bulletin 86/15**

(84) Designated Contracting States:
**AT BE CH DE FR GB IT LI LU NL SE**

(71) Applicant: **Pirovano, Camillo**
**Localitá Cavigiolo**
**I-22052 Cernusco Lombardone (Como)(IT)**

(72) Inventor: **Pirovano, Camillo**
**Localitá Cavigiolo**
**I-22052 Cernusco Lombardone (Como)(IT)**

(74) Representative: **Faraggiana, Vittorio, Dr. Ing. et al,**
**Ingg. Guzzi e Ravizza S.r.l. Via Boccaccio, 24**
**I-20123 Milano(IT)**

(54) **Animal feed delivery and metering unit.**

(57) An animal feed delivery and metering unit for inclusion in an automated conveyance and distribution line provided with a conveying member has a shape substantially tubular to allow the said conveying member to pass through, and features at least one open bore in its base and includes furthermore, proximally to the outer part of the base, guide means adapted to receive in sliding fashion a shutter element. Said shutter element can be alternately brought – with respect to the bore in the tubular unit base – to an offset position and to a coincident position.

Fig.1

ANIMAL FEED DELIVERY AND METERING UNIT

The present invention relates to an animal feed delivery and metering unit for inclusion in an automated conveyance and distribution system.

In the recent past, automated dispensing of feedstuffs for livestock has become increasingly widespread, there being used for the purpose overhead tube or channel feeder lines within which a suitable conveyor moves - in particular a wire rope or chain conveyor - to which delivery units are restrained. Auger conveyors are also employed. The delivery unit takes off the feed from a machine and delivers it to different delivery points proximal to feeding pans or troughs and/or to single cages of the batteries of cages in which the animals to be fed are housed.

Such automated feedstuff conveyance and dispensing system, especially if they have to provide feed to a large number of animals, have a known imperfection, i.e. their failure to provide a simultaneous and unifom portion of feed to all the groups of animals. In consequence, not all animals receive the same share of feedstuff: those housed closest to the point where the feed is taken off from the machine receive it first, have more time to eat and therefore eat their fill - in many instances selecting the more appetizing components.

The amount feed eaten by these privileged animals therefore cannot be limited and it becomes impossible to provide all the livestock with a rationed and balanced diet.

Attempts to solve the problem have been made, for example by increasing the speed of the conveying members in the feed conveyance and dispensing system. However, this attempted solution not only causes heavy and rapid wear of the moving mechanical parts but also calls for greater installed power for driving the conveying members.

Other known attempted solutions prove constructionally over-complex and liable to disorders, unreliable and thus not economically acceptable.

None of the attempted known proposals has succeeded in solving the specific problem which is to off-load at all the delivery points along the delivery line substantially controlled and equal amounts of feed, and thus the previously mentioned privileged animals remain in the same situation as before and the others - farther from the feed take-off point - suffer the same handicap as before.

The present invention solves the problem in question by employing two distinct and successive steps: the first step distributes the feed along the entire conveying line, and the second step delivers the distributed food at the delivery points.

In the first step, the conveying member (wire-rope, chain or auger) fills the tube - fully closed during this step - with feed in an equal and identical manner and, in the second step, delivers said feed at equidistant points so that a quantitatively and qualitatively identical portion is delivered at all the remaining delivery point, as the result of equidistant off-loading ports along the length of the tube being opened.

So as to embody this concept in a structure which is constructionally straighforward, economical and dependable, the present invention employs a feed metering and delivery unit for incorporation into a feed distribution and conveying system provided with a conveying member, said unit being characterized in that its shape is substantially tubular to allow the said conveying member to pass through, and in that it features at least one open bore in its base and, proximally to the outer part of the base, guide means adapted to receive in sliding fashion a shutter element which can be alternatively brought - with respect to the bore in the tubular unit base - to an offset position and to a coincident position.

Preferably, antifriction means are provided between the said shutter element and the tubular unit base.

For preference said antifriction means consist of an annular border in relief protruding outwards from each tubular element base bore. The shutter element, too, can be provided with at least one open bore adapted to be brought, following a controlled shift of the shutter element in one or the other direction, alternatively to an offset position and a coincident position with respect to the tubular unit base bore.

Each feed delivery and metering unit can, at a regular reciprocal distance, features a plurality of bores in its base, and in such case the relative sliding lamina will also have a corresponding number of bores so that the said unit may serve a plurality of feed delivery points. The conveyance and distribution system can also incorporate several feed delivery and metering units - one following the next and/or with closed tubular section interposed between them, depending on the requirements of the system and the arrangement of the pans, thoughs and/or cages.

The invention also provides for making one delivery and metering unit solid with one trough, both preferably being single-piece constructions made for example of extruded plastic material, with the delivery and metering unit disposed proximally to a lingitudinal upper edge of the trough.

In the case of a plurality of delivery and metering units disposed consecutively in the conveying system with the single units appropriately connected butt-wise one to the next, each unit can have its own sliding shutter and such shutter are also interconnected by suitable means, for example by screwing, riveting or welding.

In such case, moreover, a single shutter can be provided which serves several consecutive delivery and metering units. The sliding shutter of the delivery and metering unit can be controlled to perform the alternating movements by any type of mechanical, pneumatic or hydraulic control and provision can also be made for a suitable programmer for actuating said control.

If some delivery points along the conveying and distributing line should be temporarily out-of-service, provision can be made for mounting on the delivery and metering unit a sliding external sleeve adapted to be moved to a position in which the relative delivery bore of the said unit is closed.

The characteristics of the invention according to the present application will become more apparent from an examination of the following illustrative and not limiting description with reference to the appended drawings, in which:

Figure 1 is a plan and partially horizontally-sectioned view of a part of a delivery and metering element according to one form of embodiment of the invention;

Figure 2 is a relative cross-sectional view;

Figure 3 is a longitudinal sectional view showing a section of a system realized using delivery units according to another form of embodiment of the invention;

Figure 4 is a sectional view taken through the line IV-IV of Figure 3;

Figure 5 is a view taken through the arrow V of Figure 3, illustrating the system during a first operation step, with the feed delivery bores closed;

Figure 6 is a view according to Figure 5, illustrating the system during a second operating step, with the feed delivery bores opened; and

Figures 7 to 9 illustrate a further variant of the invention.

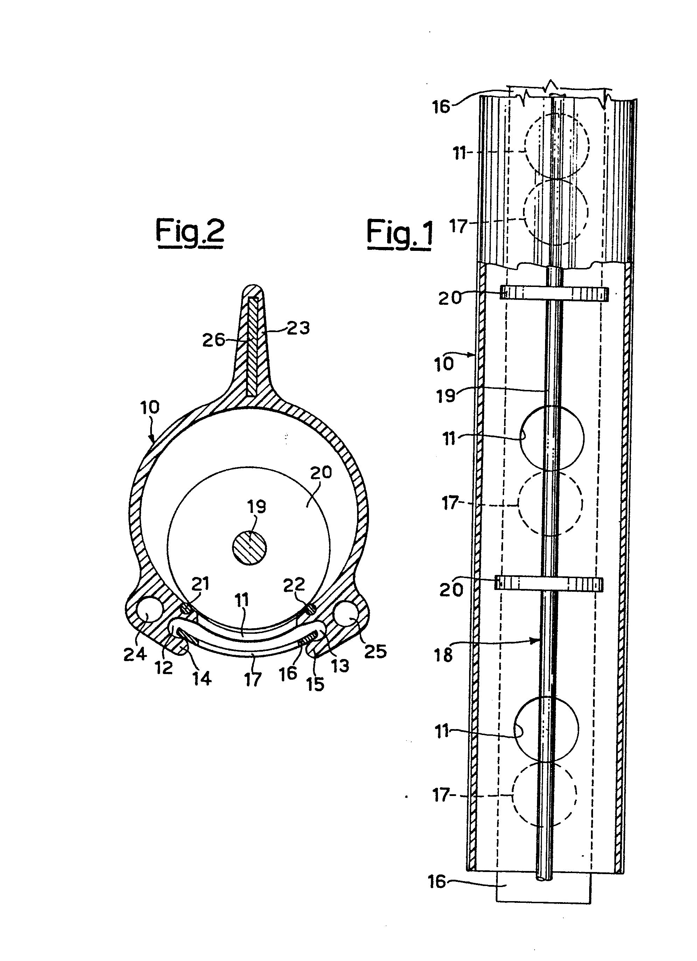

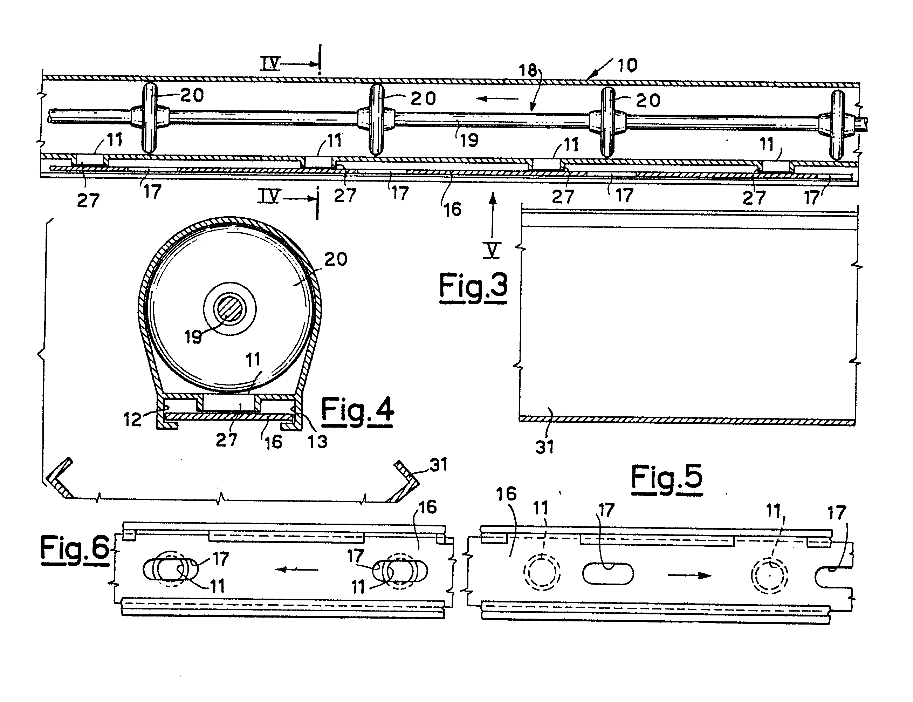

With reference to Figures 1 and 2 of the appended drawings, an animal feed delivery and metering unit, generically indicated by 10, has the shape of a tubular cylinder of appropriate lenght.

The tubular unit 10 has a circumference which is closed except for circular bores 11 in its base at regular reciprocal distances. On its lower side the tubular unit 10 has two parallel external guides 12 and 13 formed from edges 14 and 15 respectively which are solid with the unit 10, said guides being parallel to the longitudinal axis of the unit 10.

The guides 12 and 13 slidingly receive a shutter element having the form of a flat and slightly curved lamina 16 which also has circular bores 17 at regular reciprocal distances equal to the reciprocal distances of the bores 11 in the base of the tubular unit 10.

Placed slidingly within the tubular unit 10 and in its longitudinal direction is a conveying member generically indicated by 18 which, in the exemplifying instance considered, is conventionally constructed and features a wire rope 19 bearing disk-shaped conveying elements at regular reciprocal distances. For promotion of the sliding of the disks 20 of the conveying member 18, provision is made proximally to the tubular unit 10 and laterally to the bores 11 for steel wires 21, 22 on which the disks 20 rest. The tubular unit 10 is completed with a longitudinal upper reinforcement ribbing 23 and with two bores 24, 25 formed below the sides of the respective edges 14, 15.

These bores receive alignment aids (not illustrated) when consecutive units inserted into the animal feed conveying and dispensing system are assembled.

It is advantageous for the tubular unit 10, with lower guides and reinforcement ribbing, to be fabricated by extrusion of a suitable plastics material, the steel wires 21 and 22 and any metal reinforcement 26 in the reinforcement ribbing 23 being incorporated directly into the plastics material when the unit 10 is extruded.

The appendend drawings do not show the details of the conveying line in which the unit 10, or more than one of such units, is included, nor the means used to interconnect the units 10, nor the means used to interconnect the units 10 and tubular elements forming said line. Also not shown in the drawings are the means of control of the conveying member 18 and the means for controlling alternating shifts of the pre-set run on the lamina 16.

These last-mentioned means, which can be mechanical, pneumatic, hydraulic or the like, must be such as to cause alternate shifts of the lamina 16 between a position with respect to the unit 10 in which the holes 17 of the former are offset with respect to the bores 11 of the unit 10 (as shown in Figure 1) and a position in which said bores coincide, i.e. are reciprocally superimposed. Appropriate programmed controls can be provided for this purpose.

The delivery and metering unit that has been described can be used as such, but it is also possible to combine it with an ordinary trough; in such case the unit 10 will be disposed proximally to an upper edge of the trough and can be produced in a single piece - preferably by extrusion of a plastics material - with the trough. The reinforcement ribbing of the animal feed delivery and metering unit is superfluous in such an embodiment, the structure of which is in itself sufficiently rigid.

The feed delivery and metering unit according to the invention can be provided with a sleeve slidingly mounted externally to the said unit so as to allow the closing at will of a delivery bore of the unit if it is wished to prevent the release of feed at the relative delivery point.

During use of the delivery and metering units according to the invention included in an animal feed conveyance and distribution system, the closing-shutter of each unit is normally shifted to a position in which its bores are offset with respect to the delivery hole on the base of the respective unit, so that the feed cannot be released from such bores. The conveying member operating in the conveyance and distribution line then distributes the feed along the entire line at the points where there are delivery points, without yet delivering the feed to such points. Subsequently, at the pre-set time of the lamina-type shutter is caused to shift a pitch so that its bores will coincide with those in the base of the delivery and metering unit, with the result that an equal amount of feed is delivered at each delivery point. Then, to enable the feed accumulated within the conveying line in the spaces between two consecutive delivery points to be released as well, the conveyor is moved forward by a distance corresponding to the distance between two delivery points; in this phase, too, equal amounts of feed are released at all the delivery points.

From what has been described hitherto it is self-evident that the unit according to the present invention provides a very straightforward and economical solution of the problem of simultaneously releasing feed at all the delivery points along the distribution line, and also ensures that equal amounts of feed are each time released at each of said points.

It is noteworthy that the delivery and metering unit is not restricted to a given length, and that its length can be chosen at will in relation to the requirements of the system. Nor is said unit conditioned by the specific type of the conveyor illustrated, it being possible to employ other types of conveyors per se known and also a channel instead of a tube.

According to the present invention, in the form of embodiment shown in Figures 3 to 9, the opening 11 each feature an annular edge in relief 27, facing outwards, which can for example be formed by punching.

The shutter 16 translates on said edges 27 of the openings with a minimum friction, resulting only from the small contact areas (clearly visible in Figure 6) between the shutter 16 and the edges 27. 31 is the trough.

The shutter 16 can therefore be moved to and fro between the positions shown in Figures 5 and 6 by means of an inexpensive, low-power control device without the risks of jamming that would exist if elevated resistant forces were applied to the shutter 16.

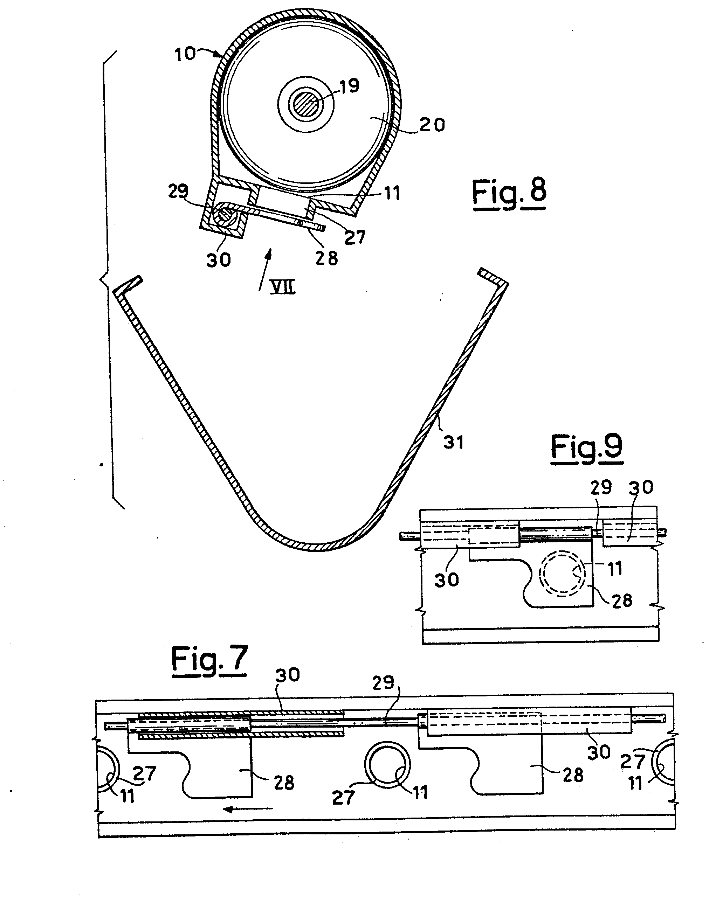

In the embodiment shown in Figures from 7 to 9, instead of being formed from a continuous lamina with holes 17 and laterally guided, the shutter 16 comprises a plurality of tabs 28 fixed cantilever-fashion to a cable 29 guided within a single guide 30 (Figures 7 and 8).

Such an embodiment featuring a single guide and a plurality of shutters is especially appropriate inasmuch as it prevents any risk of arrest of the feed between the shutters and the tube, as a result also of the downward-slanting disposition of the bottom of the tube itself.

The invention has been described with reference to a wire rope moving within a tube for purely exemplifying and not limiting purposes. The wire rope and tube can be substituted by a chain and a channel respectively, without any alteration of the scope of the invention.

CLAIMS

1) An animal feed delivery and metering unit for inclusion in an automated conveyance and distribution line provided with a conveying member, characterized in that its shape is substantially tubular to allow the said conveying member to pass through and in that it features at least one open bore in its base and, proximally to the outer part of the base, guide means adapted to receive in sliding fashion a shutter element which can be alternately brought - with respect to the bore in the tubular unit base - to an offset position and to a coincident position.

2) A unit according to claim 1, characterized in that antifriction means are provided between said shutter element and the tubular unit base.

3) A unit according to claim 2, characterized in that said antifriction means consist of an annular border in relief protruding outwards from each bore in the tubular unit base.

4) A unit according to claim 1, characterized in that said shutter element features at least one open bore adapted to be brought alternately, following a controlled shifting of the shutter in one direction or the other, into an offset position and into a coincident position with respect to the tubular unit base bore.

5) A delivery and metering unit according to claim 4, characterized in that it has in its base a plurality of bores disposed at regular reciprocal distances, and in that the sliding shutter has a like number of bores of pitch equal to that of the bores in the tubular unit base.

6) A feed delivery and metering unit according to claim 1, characterized in that said guide means for receiving the sliding shutter are formed from parallel edges protruding externally from the tubular unit.

7) A delivery and metering unit according to claim 5, characterized in that it is made of extruded plastics material in a single piece with said edges forming the shutter slide guides.

8) A delivery and metering unit according to claim 1, characterized in that it features alignment aids for contiguous units at its ends.

9) A delivery and metering unit according to claim 1, characterized in that proximally to its inner base surface it has steel wires for sliding the conveying member.

10) A delivery and metering unit according to claim 1, characterized in that it features a reinforcement ribbing.

11) A delivery and metering unit according to one or more of the claims from 1 to 8, characterized in that it is solid with one of the upper edges of a feeding trough.

12) A delivery and metering unit according to claim 10, characterized in that it is made of plastics material extruded in a single piece with the trough.

13) A unit according to claim 1, characterized in that said shutter is a continuous lamina translatable on lateral guides of the conveyor.

14) A unit according to claim 1, characterized in that said shutter comprises a plurality of interspaced tabs fixed in cantilever-fashion to a wire rope guided within a single guide.

15) A unit according to claim 13, characterized in that said tabs slide on the base of the conveyor which is inclined downwards.

Fig.2

Fig.1

0177083

Fig.3

Fig.4

Fig.5

Fig.6

Fig. 8

Fig. 9

Fig. 7